## Europäisches Patentamt
## European Patent Office
## Office européen des brevets

(19)

(11) Veröffentlichungsnummer: **0 087 613**
**B1**

(12) **EUROPÄISCHE PATENTSCHRIFT**

(45) Veröffentlichungstag der Patentschrift:
**14.05.86**

(21) Anmeldenummer: **83101086.3**

(22) Anmeldetag: **05.02.83**

(51) Int. Cl.⁴: **B 29 D  23/00,** B 29 C  63/06,
B 29 C  53/38, F 16 L  59/02,
F 16 L  58/16

(54) Verfahren und Vorrichtung zum Herstellen mehrschichtiger Isolierrohre aus Schaumstoffstreifen.

(30) Priorität: **26.02.82  DE 3206906**
**25.09.82  DE 3235635**

(43) Veröffentlichungstag der Anmeldung:
**07.09.83 Patentblatt 83/36**

(45) Bekanntmachung des Hinweises auf die Patenterteilung:
**14.05.86 Patentblatt 86/20**

(84) Benannte Vertragsstaaten:
**AT BE CH DE FR GB IT LI LU NL SE**

(56) Entgegenhaltungen:
**AT - B - 326 433**
**AT - B - 350 862**
**DE - A - 1 915 768**
**DE - A - 2 503 382**
**DE - B - 1 525 772**
**DE - B - 2 532 406**

(73) Patentinhaber: **DYNAMIT NOBEL
AKTIENGESELLSCHAFT, Postfach 1209,
D-5210 Troisdorf, Bez. Köln (DE)**

(72) Erfinder: **Feige, Siegfried, Mühlenhofweg 35,
D-5200 Siegburg (DE)**
Erfinder: **Osterhagen, Gerhard, Rottfeld 1,
D-5208 Eitorf-Wassack (DE)**
Erfinder: **Wissinger, Waldemar, Im Urnenfeld 19,
D-5200 Siegburg (DE)**

## Beschreibung

Der Gegenstand der Erfindung bezieht sich auf ein Verfahren nach dem Oberbegriff des Anspruchs 1.

Des weiteren befasst sich die Erfindung mit einer Vorrichtung zum Durchführen des Verfahrens mit einem umlaufenden Band zum Transport der kontinuierlich über eine Umlenkrolle zulaufenden Schaumstoffstreifen, einer Heizeinrichtung, einem Formtrichter mit einer gekühlten Formröhre und einer Einrichtung zum Verschliessen der Stossnaht der Seitenkanten.

Aus der EP-A-30 036 381 ist ein Verfahren zum Herstellen mehrschichtiger Rohre aus mehreren Umhüllungslagen aus Streifen der gattungsmässigen Art bekannt, das zum Umhüllen von Teilen mit grossen Querschnitten mit mehreren Umhüllungslagen aus gleichen oder unterschiedlichen Materialien, die einzeln zusammengeführt werden, vorgesehen ist. Das bekannte Verfahren ist jedoch nicht geeignet, um dickwandige Isolierungen aus Schaumstoffen auch für kleine Querschnitte der zu umhüllenden Teile ohne Falten- und Lufteinschlussbildungen kontinuierlich zu erstellen.

Rohrisolationen aus Schaumkunststoffen können, soweit diese von Schaumstoffbahnen oder Streifen ausgehen, beispielsweise durch Verformung von Streifen zur Rohrform und anschliessendes Verschliessen der in Längsrichtung verlaufenden Stossfuge durch Schweissen, Kleben o.ä. hergestellt werden (DE-AS 25 03 382 und DE-AS 25 32 406). Solche Herstellungsverfahren erfordern aufwendige Maschinen und Formen. Die notwendige Dicke der Isolierung erfordert wegen der Rückstellneigung der Schaumstoffe eine Wärmebehandlung mit der Gefahr der Schädigung der Schaumstoffe. Die erhebliche Dicke der Isolierschicht vor allem von Rohren grösserer Weite ist nur mit aufwendigen Massnahmen erreichbar. Mehrschichtige Rohrisolierungen können beispielsweise gemäss DE-OS 19 15 768 durch Umwickeln oder kreuzweises Wickeln in mehreren Schichten hergestellt werden.

Im Zuge der Energiesparmassnahmen werden immer dickere und bessere Isolationen für wärmeführende Leitungen, insbesondere Warmwasserleitungen, Heizleitungen etc. gefordert. Im üblichen Installationsbereich sind hierbei die zu isolierenden Rohrdurchmesser überwiegend kleiner als 45 mm, die geforderte Isolationsdicke entspricht etwa einem Rohrdurchmesser. Dies bedeutet beispielsweise bei einem Rohrdurchmesser von 30 mm, dass ein Isolationsrohr aus Schaumstoff mit einer Dicke von 30 mm einen Innendurchmesser von etwa 30 mm und einen Aussendurchmesser von 90 mm aufweist. Es ist sehr schwierig, aus dicken Schaumstoffstreifen ein Isolierrohr mit so kleinen Innendurchmessern zu formen, ohne dass Stauchungen und Faltenbildung des Schaumstoffes auftreten.

Der Erfindung liegt die Aufgabe zugrunde, dickwandige Isolierrohre aus Schaumstoffstreifen in einem kontinuierlichen Verfahren unter Vermeidung von Faltenbildungen und insbesondere für kleinere Rohrdurchmesser herzustellen. Die Erfindung geht hierbei von mehrschichtigen dickwandigen Isolierrohren aus, die aus mehreren übereinander angeordneten Schaumstoffstreifen aufgebaut sind.

Gemäss der Erfindung wird ein Verfahren zur Herstellung von mehrschichtigen Isolierrohren aus mehreren Umhüllungslagen aus Schaumkunststoffen der eingangs genannten Gattung vorgeschlagen, bei dem die später die Isolierrohrinnenseite bildende Seite kurzzeitig bis in den thermoelastischen bzw. thermoplastischen Zustand erwärmt und jeweils ein noch nicht erwärmter Schaumstoffstreifen auf einen erwärmten Schaumstoffstreifen gelegt wird und die beiden Schaumstoffstreifen unter Bildung einer schmalen Naht verschweisst werden und zumindest die Stossfuge der äussersten Umhüllungslage aussen und/oder in der Stossfuge verschlossen wird. Mit dem erfindungsgemässen Verfahren gelingt es, dicke Rohrisolierungen aus mehreren Schaumstoffschichten faltenfrei, formstabil und spannungsarm herzustellen.

Durch die nur linienförmige bzw. in geringer Breite erfolgende Verbindung der Schaumstreifen bleiben die Umhüllungslagen senkrecht zu der Verbindung in Umfangsrichtung des Rohres verschiebungsfähig und dadurch leicht dem Rohrumfang anpassbar und werden so leicht aus der planen Erstreckung zur Rohrisolation formbar.

Die Herstellung der Rohrisolation, ausgehend von der kontinuierlich vorgefertigten Anordnung aus mehreren Schaumstofflagen, erfolgt durch Biegen zur Rohrform auf dem Rohr selbst, bis sich die Stirnkanten jeder Umhüllungslage berühren und anschliessendes Verschliessen der in Richtung der Rohrlängsachse verlaufenden Stossfuge zumindest der äussersten Umhüllungslage. Die Herstellung der Rohrisolation kann am Ort der Verlegung der Rohre vorgenommen werden. Selbst lange Rohre bzw. Rohrabschnitte und Rohre grossen Durchmessers bzw. Rohrbündel können am Ort mittels einfacher Hilfsmittel, z.B. Rinnen oder Kästen, aber auch ohne Hilfsmittel, mit der Rohrisolation umhüllt werden. Wesentlich erleichtert wird die Aufbringung der Anordnung mehrerer Schaumstofflagen und die Verformung zur Umhüllung durch Fixierung der innersten Umhüllungslage am Rohr, was durch Kleben mit z.B. einem Kleber oder durch einen schmalen Klebestreifen unter der innersten Umhüllungslage, bevorzugt nahe an deren Anfang, über die Länge des Rohres geschehen kann. Zweckmässig ist ein Klebeband bzw. beidseitiges Klebeband bereits auf der untersten Seite der untersten Umhüllungslage befestigt, dessen Schutzschicht abgezogen werden kann.

Die Fixierung kann auch durch aktivierbare Kleber erfolgen.

Der Umhüllungsvorgang beginnt durch Fixierung der Unterseite der innersten Umhüllungslage am Rohr parallel zur Rohrlängsachse, soweit im bevorzugten Falle eine Fixierung vorgesehen ist. Dann soll bei abgestuft, abgeschrägt oder versetzt ausgebildeter Stossfuge die Profilierung der in Umhüllungsrichtung zuletzt aufgebrachten Stirnkante der Stossfuge oben übergreifen. Ebenso soll ein ggf. bereits auf der äussersten Umhüllungslage angebrachter Verschluss über der im Umhüllungsrichtung zuletzt aufgebrachten Stirnkante liegen. Die Breite jeder Umhüllungslage soll so beschaffen sein, dass die kürzeste Umhüllungslage als innerste und jede folgende darüber sich dem jeweiligen Umfang anpassen und die Stossfugen sich bei der Umhüllung schliessen. Da aber durch vorgegebene geringere oder grössere Steifigkeit die Umhüllungslagen sich auf der Unterseite stauchen und oberhalb einer etwa in der Mitte der Lagendicke liegenden Biegelinie dehnen, hat im allgemeinen die mittlere Dicke jeder Bahn (unter Berücksichtigung der Schnittlinie der Stossfuge) der Länge der Abwicklung dieser gedachten Biegelinie zu entsprechen.

Für die leichte Verformung der planen Anordnung der Umhüllungslagen zur Rohrumhüllung ist wesentlich, dass jede Lage von vergleichsweise geringer Dicke ist, die abhängig von der Steifigkeit des jeweils verwendeten Schaumkunststoffes sowie des Rohrdurchmessers höchstens einen oder wenige cm, vorzugsweise 5 bis 20 mm, beträgt. Wesentlich ist weiter die z.B. linienförmig parallel zur Rohrlängsachse verlaufende Verbindung der Umhüllungslagen mit der jeweils benachbarten Lage und die im übrigen freie Verschiebbarkeit der Umhüllungslagen gegeneinander auf ihrer übrigen Berührungsfläche für die leichte Ausführung des fortschreitenden Umhüllungsvorgangs.

Die einzelnen Umhüllungslagen können aus gleichen oder verschiedenen Schaumkunststoffen, gleicher oder versciedener Dicke bestehen. Bevorzugtes Material ist vernetzter oder ggf. unvernetzter Polyethylenschaumstoff. Zweckmässig wird die innerste Umhüllungslage dünner als die folgenden sein und ggf. aus biegsameren Schaumstoffen gebildet sein als die folgenden, die bei dem Umhüllungsvorgang weniger eng gebogen werden. Wenn gewollt, kann die innerste wie auch die äusserste Schicht aus einem anderen flächigen Material bestehen. Solche flächigen Materialien sind u.a. Metallfolien wie z.B. Aluminiumfolien oder Kunststoffolien. Diese Schichten können auch mit der innersten oder äussersten Umhüllungslage durch z.B. Laminieren oder Kleben verbunden sein. Sie dienen den verschiedensten Aufgaben, z.B. als Dampfsperre oder mechanischer Schutz, zur Farbgebung, als Schutz vor Entflammung oder gegen Witterungseinflüsse. Weiter hat sich die Ansinterung der Oberfläche der äussersten Lage gegen mechanische Beanspruchungen bewährt.

Bei den mehrschichtigen Anordnungen von Umhüllungslagen aus Schaumkunststoffen in planer Erstreckung und damit ebenso bei mehrschichtigen Rohrisolierungen können die Versetzungen verschieden gross bemessen sein, die linienförmig parallel zur Rohrachse verlaufenden Verbindungen der Umhüllungslagen an verschiedenen Stellen der Breite der Umhüllungslagen angeordnet sein, sowie die Fixierung an verschiedenen Stellen der Breite der untersten Umhüllungslage liegen.

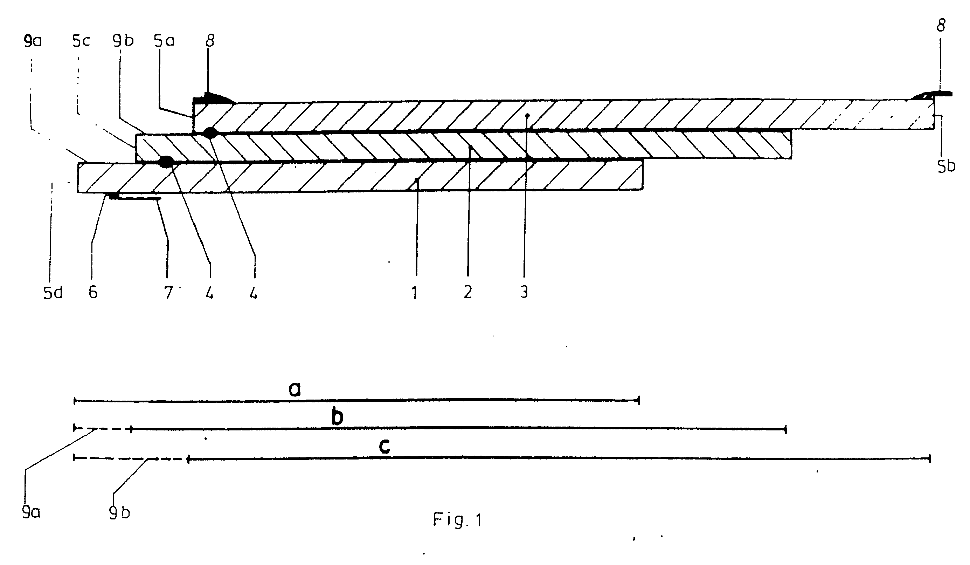

Im bereits beschriebenen bevorzugten Fall ist die Versetzung jeder Umhüllungslage gegenüber der nächsten gering d.h. beträgt einige Centimeter. Dann liegen bevorzugt auch die Verbindungen nahe an der Versetzung bzw. nahe den Stirnkanten der jeweils oberen Umhüllungslage. Eine vorhandene Fixierung liegt unter der innersten Umhüllungslage nahe bei deren Stirnkante. Dieser in Figur 1 dargestellte Fall führt zu planen Anordnungen der kleinsten Gesamtbreite und höchster Verschiebbarkeit der einzelnen Umhüllungslagen in Richtung des Rohrumfangs. Als weiterer Fall ist der zu nennen mit einer maximalen Breite der Versetzung und einer Verbindung mit der benachbarten Umhüllungslage auf der kleinen verbleibenden Berührungsfläche zu dieser und einer Fixierung im Bereich der Stirnkante der untersten Umhüllungslage. Es können auch, bei an sich beliebiger Breite der Versetzung, die Verbindungen auf der Breite der Umhüllungslagen zum anderen Ende mehr oder weniger weit verschoben sein, jedoch liegen zweckmässig dann die Verbindungen und die Fixierung im wesentlichen tangential untereinander und der Abstand der Verbindung zu den Stirnkanten der zugehörigen Umhüllungslagen ist stets so zu wählen, dass nach der Umhüllung die Stossfugen zueinander tangential versetzt sind.

Der Umhüllungsvorgang beginnt stets an der Fixierung.

Durch den Einsatz mehrerer Schaumstoffstreifen zum Herstellen des dickwandigen Isolierrohres wird erreicht, dass das kontinuierliche Herstellungsverfahren schnell durchgeführt werden kann, die dünne Schaumstoffstreifen wesentlich schneller erwärmt werden können als dicke und damit das Verfahren zum Herstellen des Isolierrohres mit kurzen Erwärmungszeiten durchgeführt werden kann. Es ist möglich, nach dem erfindungsgemässen Verfahren für die Isolierrohre Schaumstoffstreifen unterschiedlicher Dicken gemeinsam zu verarbeiten, wobei insbesondere dünnere Schichten für den inneren Teil des Isolierrohres mit den kleinen Durchmessern gewählt werden können und dickere Schaumstoffschichten für den Aussenteil des Isolierrohres. Darüber hinaus können auch Schaumstoffstreifen unterschiedlicher Qualitäten eingesetzt werden, wobei wärmebeständigere Qualitäten die Isolierrohrinnenschicht bilden können und beispielsweise witterungsstabile oder flammfestere Schaumstoffqualitäten die Isolierrohraussenseite. Das erfindungsgemässe Verfahren hat auch den Vorteil, dass sich die Wärme des bereits erwärmten Schaumstoffstreifens auf den nachfolgend zulaufenden, noch nicht erwärmten Schaumstoffstreifen überträgt, so dass dieser nicht nur auf der Oberseite erwärmt wird, sondern auch auf der Unterseite, wodurch infolge der gleichmässigen Erwärmung des Schaumstoffstreifens eine Art Temperung, d.h. spannungsfrei machen eintritt und das später geformte Isolierrohr sehr formstabil und spannungsarm ist.

Nach dem erfindungsgemässen Verfahren werden die mehreren aus den Schaumstoffstreifen gebildeten Schichten zuerst nur längs einer schmalen Naht durch Schweissen miteinander verbunden, so dass die Schaumstoffstreifen beim Formen zum Isolierrohr noch leicht gegeneinander verschoben werden können, wodurch eine leichte Formgebung und gute Anpassung ermöglicht ist. Durch das Verbinden der Seitenkanten des Isolierrohres zum geschlossenen Isolierrohr entsteht dann an einer gegenüberliegenden Stelle eine weitere Verbindungsnaht. Das Isolierrohr wird dann zum Zwecke der Montage wieder aufgeschlitzt an einer Stelle ausserhalb der beiden genannten Verbindungsnähte. Auch hier verbleibt dann eine gewisse Beweglichkeit der einzelnen Isolierschichten gegeneinander, da sie in diesen Bereichen nicht untereinander verbunden sind, wodurch die Montage erleichtert wird.

In Weiterbildung des erfindungsgemässen Verfahrens ist vorgesehen, dass die Schaumstoffstreifen während der Erwärmung längs der Seitenkanten an gekühlten Führungsleisten vorbeigeführt werden. Damit ist eine genaue Ausrichtung der Schaumstoffstreifen möglich, und zugleich werden die Seitenränder auch vor Überhitzung geschützt; dies gilt insbesondere für die überstehenden Ränder der nicht die oberste Lage bildenden Schaumstoffstreifen, die während der Erwärmung des obersten Schaumstoffstreifens ebenfalls mittels gekühlter Führungsleisten abgedeckt werden.

Eine vorteilhafte Ausbildung der Vorrichtung zur Durchführung des erfindungsgemässen Verfahrens enthält je einem zugeführten Schaumstoffstreifen zugeordnete Heizeinrichtungen, die hintereinander angeordnet sind und im Bereich der Heizeinrichtungen kühlbare und verstellbare Führungsleisten für die Seitenränder bzw. Seitenkanten der durchlaufenden Schaumstoffstreifen und in Transportrichtung vor der Umlenk- und Andrückrolle ein Schweissgerät, beispielsweise Heissluftschweissgerät.

Damit ist es möglich, eine bekannte Vorrichtung zum Durchführen des Verfahrens, wie sie beispielsweise in der deutschen Patentschrift 25 32 406 beschrieben ist, und auch ähnliche Einrichtungen wirtschaftlich zu ergänzen, um auch dickwandige Isolierrohre aus mehreren Schaumstoffstreifen kontinuierlich herzustellen.

In der Zeichnung ist die Erfindung in Ausführungsbeispielen beschrieben. Es zeigen

Figur 1 eine Anordnung von Umhüllungslagen in planer Erstreckung,

Figur 2 den Umhüllungsvorgang um ein Rohr mit einer solchen planen Anordnung,

Figur 3 und 4 mit der Isolierung umhüllte Rohre,

Figur 5 unterschiedlich geschnittene Endflächen von Umhüllungslagen,

Figur 6 und 7 Umhüllungen aus mehrschichtigen Isolationen für Rohrbündel,

Figur 8 eine schematische Gesamteinsicht einer Vorrichtung zum Herstellen von Isolierrohren aus Schaumstoffstreifen,

Figur 9 einen vergrösserten Ausschnitt in schematischer Darstellung für den Zusammenführungsbereich der Schaumstoffstreifen gemäss Figur 8,

Figur 10 den Schnitt AA nach Figur 9,

Figur 11 den Schnitt BB nach Figur 9,

Figur 12 den Schnitt CC nach Figur 9,

Figur 13 die Ansicht D nach Figur 9,

Figur 14 die Zuordnung der Schaumstoffstreifen gemäss Figur 9,

Figur 15 die Bildung des Isolierrohres im Querschnitt gemäss Figur 9,

Figur 16 und 17 zwei Isolierrohrquerschnitte gemäss Figur 9,

Figur 18 einen Isolierrohrquerschnitt mit Gleitverschluss gemäss Figur 9.

Die in Figur 1 im Querschnitt an einem Beispiel gezeigte Anordnung von Umhüllungslagen aus Schaumstoffstreifen in planer Erstreckung vor der Verlegung weist eine Umhüllungslage 1 der Breite a auf, die dem Rohrumfang des zu isolierenden Rohres entspricht. Die Breite b der Umhüllungslage 2 entspricht dem um die Dicke der Umhüllungslage 1 vergrösserten Rohrumfang. Die Breite c der Umhüllungslage 3 wiederum (und jede weitere, hier nicht gezeigte Lage) entspricht dem durch die Dicken der vorangehenden Lagen vergrösserten Rohrumfang. Die Umhüllungslagen 2 und 3 weisen einen hier treppenförmigen Versatz 9a bzw. 9b gegenüber der Umhüllungslage 1 auf. Am Beginn der innersten Umhüllungslage 1 ist auf deren Unterseite ein sich entlang der Länge der Umhüllungslage erstreckendes Klebeband 6 mit abziehbarer Schutzschicht 7 befestigt, mit dem die Anordnung auf dem Rohr entlang seiner Achse fixiert und gehalten wird. Die nach Verlegung der mehrschichtigen Rohrisolation später aussenliegende Umhüllungslage 3 weist auf ihrer Oberseite entlang beider Randflächen ein Verschlusssystem 8, z.B. einen Gleitverschluss auf, mit dessen Hilfe die beiden eine Stossfuge bildenden Stirnkanten 5a und 5b der obersten Umhüllungslage 3 verschlossen und die Verlegung beendet wird. Die senkrecht zur Zeichenebene in Richtung der Länge der Umhüllungslagen auf geringer Breite durch die Verbindungen 4 in Form von Punkt- oder Streckenheftungen verbundenen Umhüllungslagen 1 bis 3 sind auf der übrigen Breite gegeneinander verschiebbar. Die dargestellte bevorzugte Lage der Verbindungen 4 nahe den Stirnkanten 5c und 5d der Umhüllungslagen 1 und 2 entspricht der Lage des Klebebandes 6 nahe der Versetzung und der Stirnkante 5d am Beginn der Anordnung und einem Beginn der Montage auf der in Figur 1 linken Seite. Wenn gewollt, können die Verbindungen 4 auch an beliebiger Stelle der Breite der Umhüllungslagen angeordnet, d.h. in der Zeichnung nach rechts verschoben sein, jedoch ist dann entsprechend der grösseren Verschiebung der Umhüllungslagen gegeneinander bei Umhüllung auch ein jeweils grösserer Versatz 9a und 9b vorzusehen.

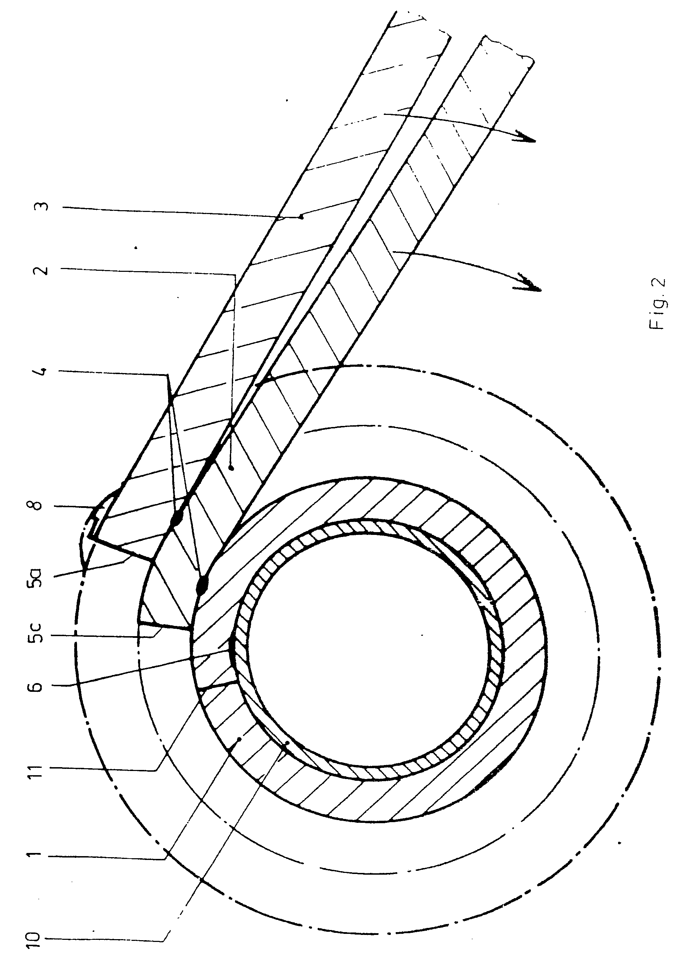

Figur 2 zeigt im Querschnitt zur Rohrachse des Rohres 10 eine mehrschichtige Anordnung von Umhüllungseinlagen aus Schaumkunststoffen in ursprünglich planer Anordnung während des verfahrensgemässen Umhüllungsvorganges zur Herstellung der mehrschichtigen Rohrisolation. Die durch die Fixierung 6 in Form eines in Richtung der Rohrlängsachse verlaufenden Klebebandes am Rohr 10 befestigte Umhüllungslage 1 ist durch die Verbindung 4 mit den Umhüllungslagen 2 und 3 verbunden und hat sich durch die einzelne Bewegbarkeit im Bereich ihrer übrigen Breite von den Umhüllungslagen 2 und 3 entfernt und wurde bereits an den Rohrumfang angelegt und zur innersten Umhüllungslage geformt, wobei die Stossfuge 11 als geschlossen dargestellt ist. Die Umhüllungslage 2 hat sich bereits etwas in die durch einen Pfeil angegebene Umhüllungsrichtung geneigt und weist nun einen Spalt gegenüber der Umhüllungslage 3 auf, die aus etwas steiferem Schaumstoffmaterial besteht und sich nur wenig in Umhüllungsrichtung des Pfeils gesenkt hat. Durch einzelnes oder gemeinsames Schieben in Pfeilrichtung werden darauf auch die Umhüllungslagen 2 und 3 zu den durch gestrichelte Kreise angedeuteten Umhüllungen geformt, wobei sich die Stirnkanten 5a und 5c mit den zugehörigen (nicht dargestellten) Stirnkanten am anderen Ende der Umhüllungslagen 2 und 3 zur jeweiligen Stossfuge schliessen und der Umhüllungsvorgang durch Schliessen des Verschlusses 8 beendet wird.

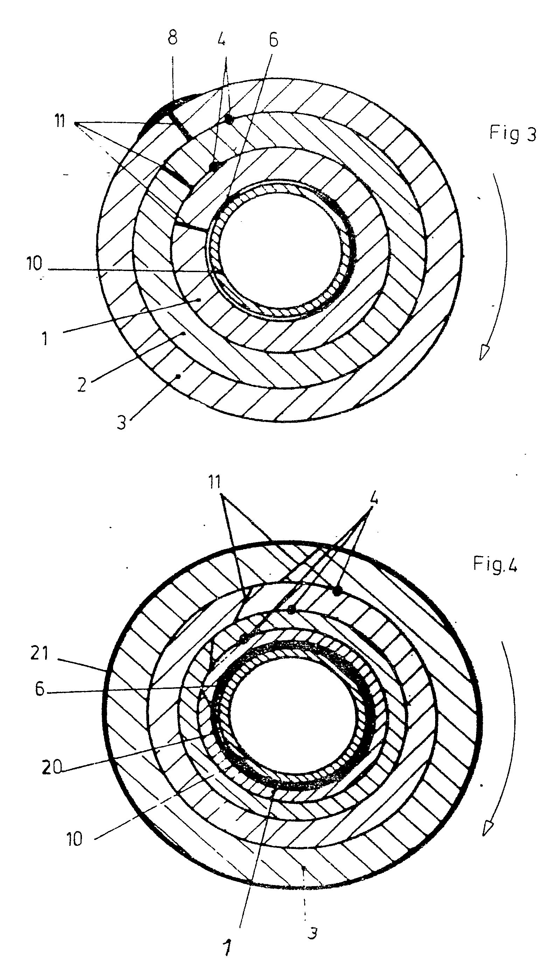

Figur 3 zeigt im Querschnitt zur Rohrachse ein Rohr 10 mit aufgebrachter mehrschichtiger Rohrisolation, die nach dem Verfahren gemäss der Erfindung aus einer mehrschichtigen planen Anordnung von Umhüllungslagen (entsprechend Figur 1) durch Fixierung bzw. Befestigen des Klebebandes 6 am Rohr, Umhüllung des Rohres in der durch Pfeil angedeuteten Umhüllungsrichtung und Schliessen des Verschlusssystems 8 hergestellt wurde. Die Randflächen der jeweiligen, hier senkrecht zur Schaumstofflage geschnittenen, Umhüllungslagen haben sich zu den radialen Stossfugen 11 geschlossen.

Figur 4 zeigt eine erfindungsgemäss hergestellte Rohrisolation auf dem Rohr 10, in der abweichend von Figur 1 vier Umhüllungslagen abgeschrägt ausgebildete Stossfugen aufweisen. Die unterste Umhüllungslage 1 besteht aus einer dünneren und/oder weicheren Schaumstofflage, die auf der dem Rohr zugewandten Seite mit einer die Wärmestrahlen reflektierenden Beschichtung 20 aus Aluminiumfolie versehen ist. Die äussere Umhüllungslage 3 ist gegenüber den darunterliegenden Lagen dicker ausgebildet, kann aus einem härteren Schaumstoffmaterial bestehen und trägt auf der Aussenseite eine Beschichtung 21, welche beispielsweise als witterungsbeständige, mechanisch bzw. chemisch beanspruchbare oder flammwidrige Haut ausgebildet ist oder mit einer besonderen Farbgebung versehen werden kann. Die Stirnkanten der Umhüllungslagen der verwendeten Anordnung sind schräg zur Ausbreitung der Umhüllungslagen geschnitten und ergeben sich überlappend berührende Stossfugen 11.

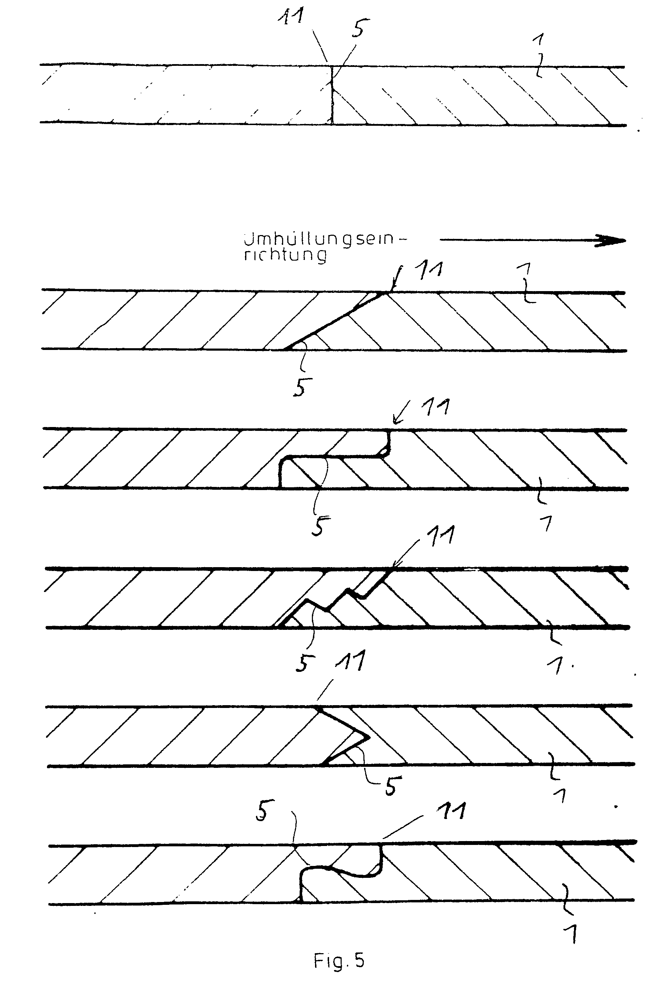

Die in Figur 5 dargestellten, unterschiedlich geschnittenen Stirnkanten 5 von Umhüllungslagen ergeben die Stossfugen 11. Die schrägen Schnitte der Stossfugen 11 vermögen Toleranzen auszugleichen. Die Schnitte der Stossfugen 11 werden im allgemeinen durch Brennschneiden erzeugt und verbessern die Haftung der Endflächen aneinander. Der eingezeichnete Pfeil gibt die Umhüllungsrichtung an, die bei den dargestellten Schnittrichtungen das bevorzugte Übergreifen der Stirnkante auf der Oberseite der Umhüllungslagen ergibt.

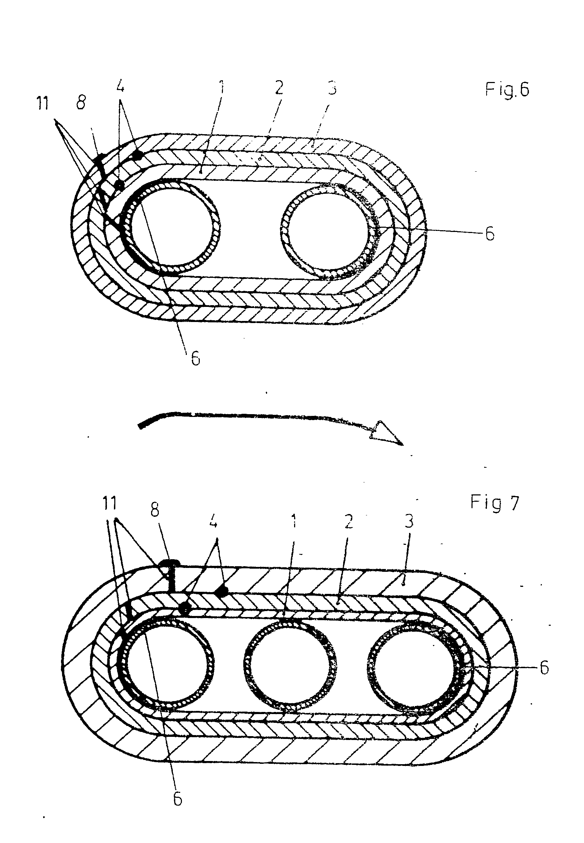

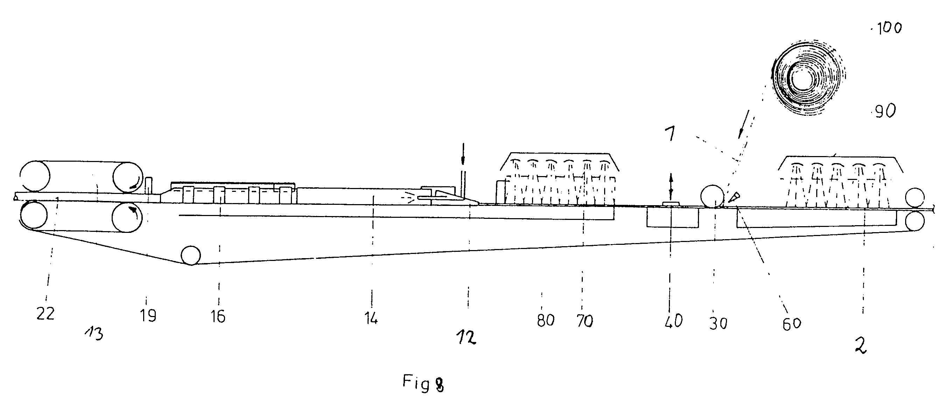

Die Figuren 6 und 7 schliesslich zeigen Beispiele für die Ummantelung mehrerer Rohre mit einer gemeinsamen mehrschichtigen Isolation, die aus mehrschichtigen planen Anordnungen von Umhüllungslagen aus Schaumstoffstreifen hergestellt wurde. Die Rohre sind in nicht gezeigter Weise durch bereits erfolgte Montage oder durch Abstandshalter gegeneinander festgelegt. Die am in der Zeichnung linken Rohr begonnene und in Richtung des gezeichneten Pfeils erfolgte Umhüllung wird im Beispiel durch die Fixierungen 6 in Form von vor der Umhüllung auf dem linken und rechten Rohr aufgebrachten Klebestreifen in Richtung der Rohrlängsachse erleichtert.

Mit der in Fig. 8 dargestellten Vorrichtung können aus Schaumstoffstreifen aus thermoplastischem Schaumstoff, beispielsweise Polyolefinschaumstoffen, wie vernetzten Polyäthylenschaumstoffen, Isolierrohre 22 hergestellt werden. Die Schaumstoffstreifen 1, 2 werden hierbei von Vorratsrolle 10 und einer weiteren nicht gezeigten Vorratsrolle über Umlenkrollen 30 auf das endlos umlaufende Transportband 80 auf. Hier kann auch noch eine Klebestelle 40 vorgesehen sein zum endlosen Aneinanderfügen der Schaumstoffstreifen bei Rollenwechsel. Zuerst durchläuft der Schaumstoffstreifen 2 die Heizeinrichtung 90, beispielsweise Infrarotstrahler, wobei die Oberseite des Schaumstoffstreifens bis in den thermoelastischen bzw. thermoplastischen Bereich erwärmt wird. Auf die Oberseite des Schaumstoffstreifens 2 wird dann der nächste Schaumstoffstreifen 1 zugeführt, wobei die Umlenkrolle 30 gleichzeitig die Aufgabe der Andrückrolle übernimmt. Zum Verbinden der Schaumstoffstreifen 1 und 2 miteinander ist das Heissluftgerät 60 vorgesehen, wodurch eine schmale Schweissnaht bewirkt wird. Nach dem Durchlaufen der nächsten Heizeinrichtung 70 laufen die Schaumstoffstreifen in den Formtrichter 12 ein und werden dann durch die Formröhre 14 unter Kühlung geführt, mittels der Rolle 16 unter weiterer Abkühlung geführt und abgezogen, und an der Stelle 19 beispielsweise mittels einer Schweisseinrichtung mit Heizschwert die Stossnaht der Länge der Kanten des Isolierrohres verschlossen, und nach Durchlaufen der Andrück- und Abzugsvorrichtung 13 verlässt das Isolierrohr 22 die Anlage. Hier kann noch eine Schlitzvorrichtung zum Schlitzen des Isolierrohres für die nachfolgende Montage und eine Aufwickelvorrichtung nachgeordnet werden. Im Bereich 19 kann auch anstelle des Verschweissens des Isolierrohres ein Gleitverschluss längs der beiden Kanten des Isolierrohres aufgeschweisst werden.

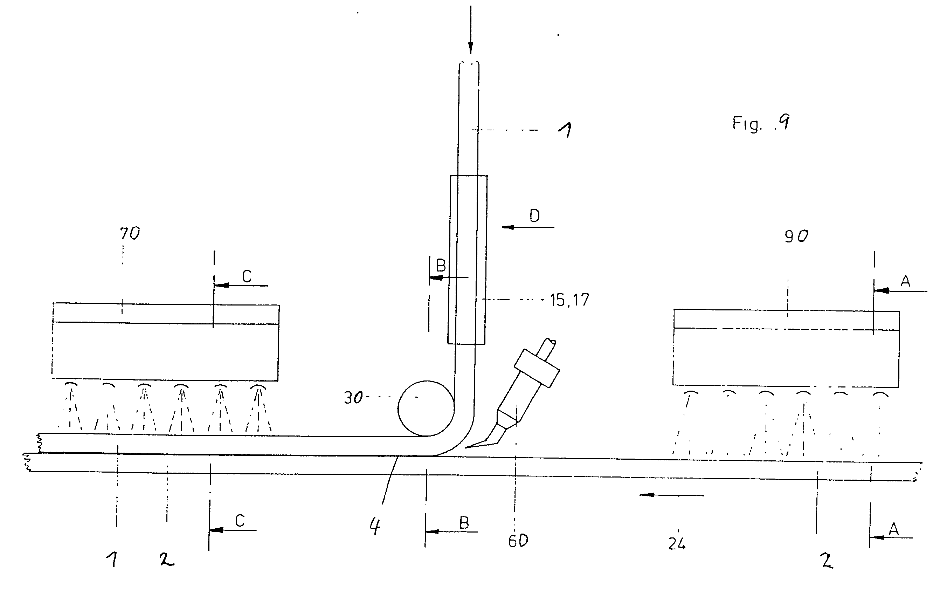

In der Fig. 9 ist die Ausbildung der Vorrichtung zum Verbinden mehrerer Schaumstoffstreifen als Umhüllungslagen und Herstellen von dickwandigen Isolierrohren hieraus schematisch dargestellt. Entsprechend der Dicke des gewünschten Isolierrohres können zwei, drei oder mehr Schaumstoffstreifen 1, 2, 3 mit einer entsprechenden Anzahl von Heizeinrichtungen und Zuführungseinrichtungen zu einem Isolierrohr verbunden und geformt werden. In dem gezeigten Beispiel sind lediglich Isolierrohre aus zwei Schaumstoffstreifen 1, 2 mit zwei Heizeinrichtungen 70, 90 dargestellt. Aus der Fig. 14 ist ersichtlich, dass die Schaumstoffstreifen 1, 2 entsprechend ihrer Dicke und dem Isolierrohrdurchmesser unterschiedliche Längen aufweisen, vorzugsweise werden die Schaumstoffstreifen 1, 2 mittig aufeinandergeführt und im mittleren Bereich 4 mittels einer Schweissnaht zusammengeheftet. In Fertigungsrichtung, die der Pfeil 24 andeutet, wird nach Fig. 9 zuerst der Schaumstoffstreifen 2 beim Durchlaufen der Heizeinrichtung 90, beispielsweise Infrarotstrahler, auf seiner Oberseite bis zur Plastizität erwärmt. Hierauf wird dann der zweite schmalere Schaumstoffstreifen 1 aufgebracht, der über eine Führungseinrichtung 15, 17 und die Umlenk- und Andrückrolle 30 auf den Schaumstoffstreifen 2 aufgebracht wird. Im Zulauf- und Verbindungsbereich zwischen Andrückrolle 30 und Schaumstoffstreifen 2 ist das Heissluftgerät 60 angeordnet, wodurch die beiden Schaumstoffstreifen 1, 2 in geringer Breite unter Bildung der Schweissnaht 4 miteinander verschweisst werden. Dann laufen die beiden Schaumstoffstreifen 1, 2 weiter in die nächste Heizeinrichtung 70, in der die Oberfläche des Schaumstoffstreifens 1 bis in den plastischen Zustand hin erwärmt wird. Je nach der gewünschten Dicke des Isolierrohres kann nun noch eine weitere Zuführung eines weiteren Schaumstoffstreifens und eine weitere Heizeinrichtung nachgeschaltet werden, bis dann nach Erreichen der gewünschten Dicke der Isolierung die Schaumstoffstreifen der Formgebung zugeführt werden.

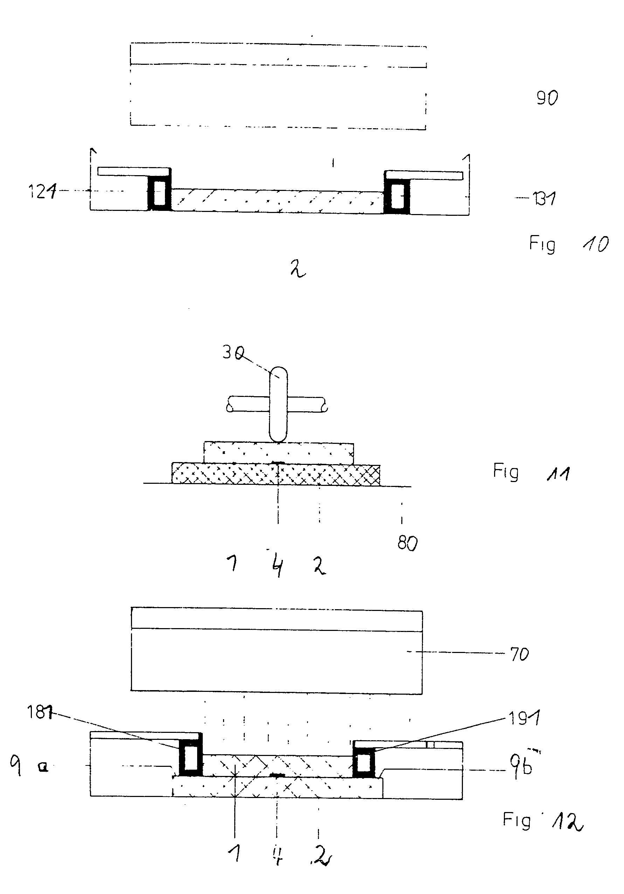

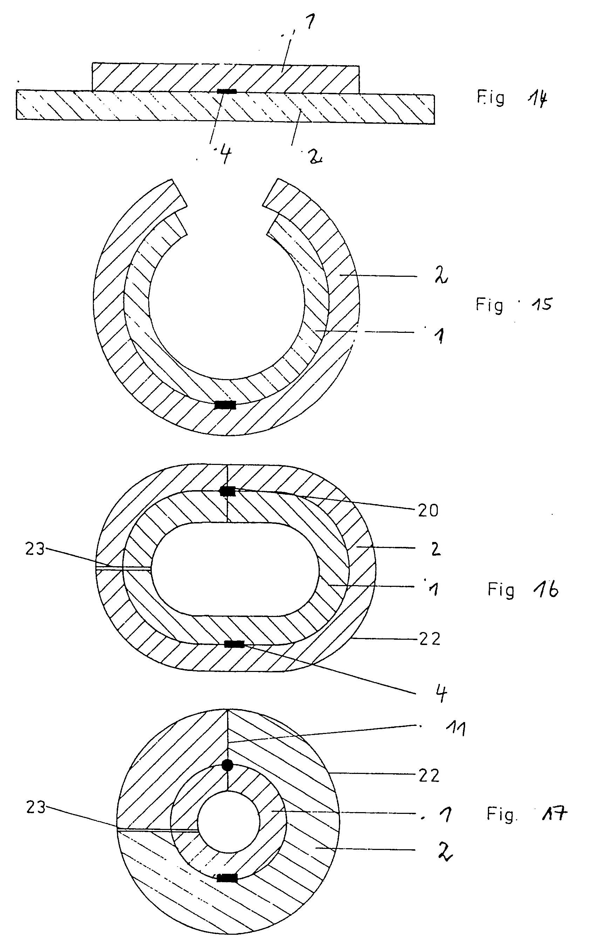

Für die Herstellung der dickwandigen Isolierrohre aus mehreren Schaumstoffstreifen ist es sehr wichtig, dass diese einwandfrei parallel zueinander und in der gewünschten Lage geführt werden. Aus diesem Grunde ist vorgesehen, dass die jeweils der Heizeinrichtung zugeführten Schaumstoffstreifen bereits im Zuführungsbereich ausgerichtet geführt werden, hierzu ist beispielsweise, wie in der Fig. 13 dargestellt, die seitliche Führung durch einstellbare Begrenzungsleisten 15, 17 vorgesehen. Auch beim Durchlaufen der Heizeinrichtungen 70, 90 ist es notwendig, die Schaumstoffstreifen einwandfrei zu führen. Die Fig. 10 zeigt den Querschnitt AA durch die Heizeinrichtung 90, in der erst ein Schaumstoffstreifen zu führen ist. Hier wird die Ausrichtung des Schaumstoffstreifens 2, wie in Fig. 10 dargestellt, mittels der Führungsleisten 121, 131 entlang der Längskanten des Schaumstoffstreifens bewirkt. Diese Führungsleisten 121, 131 sind gekühlt, beispielsweise mit durchlaufendem Kühlwasser, und sind – was nicht näher ausgeführt ist – in der Breite und Höhe verstellbar.

Die Fig. 12 zeigt den Querschnitt CC durch die Heizeinrichtung 70 mit der Führung bei mehreren Schaumstoffstreifen. Hier sind Führungsleisten 181, 191 ebenfalls in der Höhe und Breite verstellbar und mit Kühlung ausgebildet so angeordnet, dass sie die seitlich überstehenden Ränder 9a, 9b des unteren Schaumstoffstreifens abdecken und damit vor Überhitzung schützen. Gleichzeitig bilden sie die Führung für die Kanten des oberen Schaumstoffstreifens 1.

Die Fig. 11 zeigt einen schematischen Querschnitt gemäss Schnitt BB nach Fig. 9 im Bereich der Andrückrolle 30. Das Zusammenführen der Schaumstoffstreifen 1 und 2 und die Bildung der Schweissnaht 4 ist gezeigt, die Schaumstoffstreifen werden von dem Transportband 80 kontinuierlich weitergeführt. Vorzugsweise werden die Streifen 1, 2 mittig übereinander parallel zu ihrer Längserstreckung ausgerichtet. Es ist jedoch auch möglich, den Schaumstoffstreifen 1 etwas aussermittig, jedoch noch innerhalb der Breite des unteren grösseren Schaumstoffstreifens 2, anzuordnen. Dies kann beispielsweise dann zweckmässig sein, wenn das herzustellende mehrschichtige Isolierrohr mit einem Gleitverschluss ausgerüstet werden soll, wie beispielhaft in Fig. 18 im Querschnitt dargestellt. Da bei Vorsehung eines Gleitverschlusses 8 die Stossnaht 11 nicht verschweisst wird, erhält man einen luftdichteren Verschluss, wenn man die Stossnaht 11 der beiden Schichten 1, 2 wie in Fig. 18 gezeigt, gegeneinander versetzt, so dass eine abgeknickte Stossnaht 11, 11a entsteht.

In der Fig. 15 ist schematisch die Formung der miteinander linienförmig längs der Naht 4 verbundenen Schaumstoffstreifen 1, 2 zum Rohrquerschnitt dargestellt. Da die Schaumstoffstreifen 1, 2 noch leicht gegeneinander verschoben werden können, ist ein sehr leichtes Verformen zum Rohrquerschnitt möglich. Auch bei Isolierrohren mit sehr kleinen Innendurchmessern und grossen Wanddicken ist es nach dem erfindungsgemässen Verfahren möglich, diese ohne innere Stauchfalten herzustellen. Bevorzugt werden für die inneren Schichten des Isolierrohres dünnere Schaumstoffstreifen eingesetzt und für die äusseren dickere, wie beispielsweise in Fig. 17 dargestellt. Für den Fall, dass bei der Formgebung das Isolierrohr mit einer Schweissnaht 11 in Längsrichtung verschlossen ist, wird nachträglich das Rohr geschlitzt, siehe Schlitz 23, um die Montage zu ermöglichen. Dieser Schlitz kann später mittels eines übergeklebten Klebebandes geschlossen werden, er kann jedoch auch offengelassen werden, da das nach dem Verfahren hergestellte Isolierrohr formstabil und formtreu ist und der Schlitz 23 nicht offensteht.

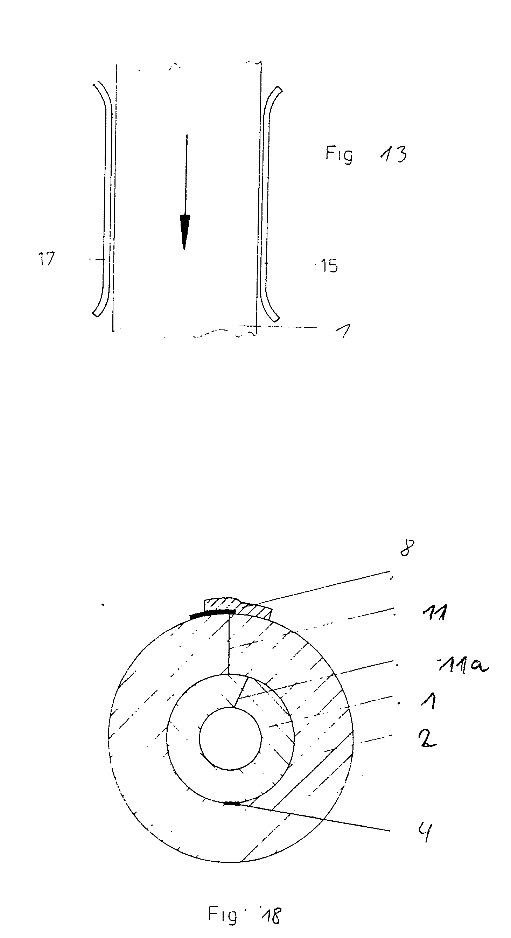

Fig. 16 zeigt eine Variante des geformten Isolierrohres 22.

Isolierrohre der beschriebenen Art haben gegenüber einschichtigen Isolierrohren den Vorteil grösserer Flexibilität beim Aufklappen und lassen sich leicht handhaben.

## Patentansprüche

1. Verfahren zum kontinuierlichen Herstellen von
- mehrschichtigen, dickwandigen Isolierrohren
- aus mehreren Umhüllungslagen (1, 2, 3) aus Schaumstoffstreifen
  - in planer Erstreckung und
  - unterschiedlicher Breite,
wobei die
- innerste Lage eine Breite aufweist, die dem zu isolierenden Rohr- bzw. Rohrbündel-Umfang entspricht, und wobei
- jede weitere Lage eine Breite aufweist, die der Summe der Breite und der Dicke der nach innen nächstliegenden Lage entspricht, wobei ferner die Schaumstoffstreifen
  - in der Reihenfolge der Isolierschichten von aussen nach innen
  - parallel zu ihrer Längserstreckung nacheinander zusammengeführt werden und danach die Schaumstoffstreifen
  - quer zu ihrer Längserstreckung zum Rohrquerschnitt verformt
  - und längs der Seitenkanten verbunden werden, dadurch gekennzeichnet, dass die später jeweils nach innen weisende Seite eines Schaumstoffstreifens kurzzeitig bis in den thermoelastischen bzw. thermoplastischen Zustand erwärmt und jeweils ein noch nicht erwärmter Schaumstoffstreifen auf einen erwärmten Schaumstoffstreifen gelegt wird und die beiden Schaumstoffstreifen unter Bildung einer schmalen Naht verschweisst werden und zumindest die Stossfuge der äussersten Umhüllungslage aussen und/oder in der Stossfuge verschlossen wird.

2. Verfahren nach Anspruch 1, dadurch gekennzeichnet, dass die Schaumstoffstreifen während der Erwärmung längs der Seitenkaten an gekühlten Führungsleisten (121, 131) vorbeigeführt werden.

3. Verfahren nach Anspruch 1 oder 2, dadurch gekennzeichnet, dass die überstehenden Ränder der nicht die oberste Lage bildenden Schaumstoffstreifen während der Erwärmung des obersten Schaumstoffstreifens mittels gekühlter Führungsleisten (181, 191) abgedeckt werden.

4. Verfahren nach Anspruch 1, dadurch gekennzeichnet, dass die Stossfugen, zumindest der äusseren Umhüllungslage, durch Schweissen, Verkleben, einen Klebestreifen, Heftung oder Gleitverschluss verschlossen werden.

5. Vorrichtung zum Durchführen des Verfahrens nach einem der Ansprüche 1 bis 4 mit einem umlaufenden Band zum Transport der kontinuierlich über eine Umlenkrolle zulaufenden Schaumstoffstreifen, einer Heizeinrichtung (70, 90), einem Formtrichter (12) mit einer gekühlten Formröhre (14) und einer Einrichtung zum Verschliessen der Stossnaht der Seitenkanten, dadurch gekennzeichnet, dass je einem zugeführten Schaumstoffstreifen eine Heizeinrichtung (70, 90) zugeordnet ist und im Bereich der Heizeinrichtungen kühlbare und verstellbare Führungsleisten (121, 131; 181, 191) für die Seitenkanten bzw. Seitenränder (5a, 5b) der durchlaufenden Schaumstoffstreifen angeordnet sind und in Transportrichtung vor der Umlenk- und Andrückrolle (3) ein Schweissgerät (60) angeordnet ist.

## Revendications

1. Procédé de fabrication en continu:
- de tubes isolants à plusieurs couches et à parois épaisses
- à partir de plusieurs couches (1, 2, 3) d'enrobage réalisées à partir de bandes de produit alvéolaire
  - disposées à plat
  - et de largeurs diverses,
où la couche la plus intérieure a une largeur correspondans à la circonférence du tube ou du faisceau de tubes à isoler, et où chaque autre couche a une largeur correspondant à la somme de la largeur et de l'épaisseur de la couche intérieurement voisine,
où en outre les bandes de produit alvéolaire sont rassemblées les unes à la suite des autres parallèlement au sens de leur longueur et dans l'ordre de succession des couches d'isolation, de l'intérieur vers l'extérieur et sont ensuite déformées perpendiculairement à leur longueur, conformément à la section du tube, et assemblées le long de leurs arêtes latérales, caractérisé par le fait que le côté ultérieurement tourné vers l'intérieur d'une bande de produit alvéolaire est chauffé temporairement à l'état thermoélastique ou thermoplastique, qu'une bande de produit alvéolaire non chauffée est posée sur une bande de produit alvéolaire chauffée, que les deux bandes sont soudées entre elles en formant une soudure étroite, et qu'au moins le joint ouvert de la couche d'enrobage la plus extérieure est fermé à l'extérieur et/ou à l'intérieur du joint.

2. Procédé selon la revendication 1, caractérisé par le fait que, pendant le chauffage, on fait passer les bandes de produit alvéolaire, le long de leurs arêtes latérales, sur des barres de guidage (121, 131) refroidies.

3. Procédé selon la revendication 1 ou 2, caractérisé par le fait que les bords en saillie des bandes de produit alvéolaire ne formant pas la couche supérieure sont, pendant le chauffage de la bande supérieure de produit alvéolaire, recouverts par des barres de guidage (181, 191) refroidies.

4. Procédé selon la revendication 1, caractérisé par le fait que les joints ouverts d'au moins la couche d'enrobage extérieure sont fermés par soudage, collage, ou agrafage, ou à l'aide d'un ruban adhésif ou encore d'une fermeture coulissante.

5. Dispositif pour la mise en œuvre du procédé selon l'une quelconque des revendications 1 à 4, avec une bande de transport sans fin pour le transport des bandes de produit alvéolaire amenées en continu par l'intermédiaire d'un rouleau de renvoi, un dispositif de chauffage (70, 90), un cône de façonnage (12) avec un tube de façonnage refroidi (14) et un dispositif pour fermer le joint ouvert des arêtes latérales, caractérisé par le fait qu'un dispositif de chauffage (70, 90) est affecté à chaque bande de produit alvéolaire amenée, qu'on a disposé dans la zone des dispositifs de chauffage des barres de guidage (121, 131, 181, 191) refroidissables et réglables pour les arêtes latérales ou encore les bords latéraux (5a, 5b) des bandes continues de produit alvéolaire, et qu'un appareil de soudage (60) est disposé en amont dans le sens de transport du rouleau de renvoi et de pression (30).

## Claims

1. Process for the continuous production of:
   - multilayered thick walled insulating tubes
   - from several sheathing layers (1, 2, 3) formed from foam strips
   - of flat extent and
   - of different widths, with the
   - innermost layer possessing a width which corresponds to the extent of the tube or tube bundle for insulating, and with
   - each further layer possessing a width which corresponds to the sum of the width and the thickness of the layer next lying inwardly, with, furthermore, the foam strips
   - being guided together one after the other in the sequence of insulating layers from the outside to the inside
   - parallel to their longitudinal direction and then the foam strips are
   - shaped transverse to their longitudinal direction to the tube cross-section

   - and bonded along the lateral edges, characterised in that the side of a foam strip facing inwardly at any given time is warmed later for a short time until in the thermoelastic or thermoplastic state and a foam strip not yet heated at such time is laid on a warmed foam strip and the two foam strips are welded together with formation of a narrow seam and at least the butt joint of the otermost extending layer is closed on the outside of and/or in the butt joint.

2. Process according to claim 1, characterised in that the foam strips are conducted during the heating lengthwise of the laterial edges on cooled guiding strips (121, 131).

3. Process according to claim 1 or 2, characterised in that the projecting edges of the foam strips not forming the uppermost layer are covered during the heating of the uppermost foam strip by means of cooled guide strips (181, 191).

4. Process according to claim 1, characterised in that the butt joints, at least of the outer extending layers, are sealed by welding, gluing, an adhesive strip, stitching or sliding fastener.

5. Apparatus for carrying out the process according to one for claims 1 to 4 with a circulating strip for the transporting of the foam strips circulating continuously over a guide roller, a heating arrangement (70, 90), a shapping funnel (12) with a cooled shaping tube (14) and an arrangement for the sealing to the butt joint of the lateral edges, characterised in that a heating arrangement (70, 90) is arranged for a supplied foam strip and, in the region of the heating arrangements are arranged coolable and adjustable guide edges (121, 131, 181, 191) for the lateral edges or lateral margins (5a, 5b) of the foam strips passing through arranged and a sealing apparatus (60) is arranged before the guide and pressing roller (3), in the transporting direction.

Fig. 1

Fig. 2

0 087 613

Fig 3

Fig.4

Umhüllungseinrichtung

Fig. 5

Fig.6

Fig 7

100

90

2

60

30

40

1

70

80

12

14

16

19

13

22

Fig 8

Fig. 9

90

124 --- 131

Fig 10

2

30

Fig 11

80

1  4  2

70

181                                    191

9 a                                      9 b

Fig 12

1  4  2

Fig 14

Fig · 15

Fig 16

Fig. 17

Fig 13

17

15

1

Fig 18

8

11

11a

1

2

4